# EUROPÄISCHE PATENTANMELDUNG

(11) **EP 1 213 897 A1**
(43) Veröffentlichungstag der Anmeldung: **12.06.2002**
(21) Anmeldenummer: 00127112.1
(22) Anmeldetag: 11.12.2000
(51) Int. Cl.: H04M 1/247, H04M 1/2745

(54) **Verfahren zur Konfigurierung einer Benutzeroberfläche**

(71) Anmelder: SIEMENS AKTIENGESELLSCHAFT, 80333 München (DE)
(72) Erfinder: Niemoeller, Meinrad, 83607 Holzkirchen (DE); Schneider, Tobias, Dr., 81825 München (DE)

(57) **Zusammenfassung**

Verfahren zur Konfigurierung einer Benutzeroberfläche für ein elektronisches Gerät zum mindestens temporären Anschluß an ein Telekommunikations- bzw. Datennetz, mit einer sprachorientierten Bedienoberfläche und/oder einer Spracheingabeeinrichtung, wobei die Konfigurierung der Bedienoberfläche oder Spracheingabeeinrichtung über das Telekommunikations- bzw. Datennetz erfolgt, indem mindestens Teile eines Wortschatzes von einer Zentrale im Telekommunikations- bzw. Datennetz an eine Endgerät-Komponente der Benutzeroberfläche übertragen und in dieser empfangen und in einem internen Wortschatzspeicher gespeichert werden.

## Beschreibung

Die Erfindung betrifft ein Verfahren zur Konfigurierung einer Benutzeroberfläche für ein elektronisches Gerät gemäß dem Oberbegriff des Anspruchs 1. Sie betrifft weiterhin ein mit einer solchen Benutzeroberfläche bzw. -schnittstelle ausgestattetes elektronisches Gerät.

Tragbare und speziell auch handgehaltene elektronische Geräte sind aus der modernen Gesellschaft nicht mehr wegzudenken und stellen seit längerem einen Gegenstand dynamischer technischer und wirtschaftlicher Entwicklung dar. Diese Entwicklung hat ihren Durchbruch mit den frühen tragbaren Transistorradios und Taschen-Transistorradios gehabt und später mit dem Walkman und dem tragbaren CD-Spieler (Discman) auf dem Gebiet der Unterhaltungselektronik weitere Höhepunkte erlebt. Eine ähnliche Entwicklung zeichnet sich auf diesem Gebiet bereits jetzt für den MP3-Player zur Speicherung von aus dem Internet heruntergeladenen Musikstücken ab.

Neben handgehaltenen Audiogeräten zählen zu den erwähnten Geräten auch die seit langem zur Bedienung von stationären Fernseh-, Video- und Hifi-Geräten üblichen und in letzter Zeit auch verstärkt zur Steuerung anderer Geräte im Heimbereich (Beleuchtung, Tür- und Torsteuerungen etc.) eingesetzten Fernbediengeräte.

Bei den ebenfalls stark verbreiteten handgehaltenen Rechenund Datenverarbeitungsgeräten der verschiedenen Anwendungsspezifikationen und Leistungsklassen - vom einfachen Taschenrechner über den programmierbaren Taschenrechner und einfachere Adreß- und Termindatenbanken bis hin zum höchstleistungsfähigen Handheld-PC bzw. PDA (Personal Digital Assistant) - hat sich eine rasante Entwicklung hin zu höherer Leistungsfähigkeit und Komplexität vollzogen.

Herausragende wirtschaftliche Bedeutung haben in den letzten Jahren bei den handgehaltenen elektronischen Geräten die Mobiltelefone und Schnurlostelefone erlangt. Auch hier ist eine höchst dynamische Entwicklung der Leistungsfähigkeit zu verzeichnen, die zu modernen Mobiltelefonen mit einer Fülle von Komfortmerkmalen und Internetzugang per WAP (Wireless Application Protocol) geführt hat.

Die erheblich gestiegene Komplexität der Funktionen der erwähnten Geräte hat bereits vor einiger Zeit zu einem Abgehen von der althergebrachten Bedienung über einfache Funktionstasten und zum verstärkten Einsatz sprachorientierter und/oder grafischer Benutzeroberflächen bzw. -schnittstellen geführt. Ein Musterbeispiel hierfür ist die Bedienung moderner Mobiltelefone über ein Dialogsystem, das auf der optischen Anzeige von Steuerworten, Namen etc. und einer entsprechenden Auswahl mit variabel belegten Funktionstasten (sogenannten Softkeys) beruht.

Angeregt durch die dynamische Entwicklung und den Anwendungserfolg von Sprachsteuerungs- und Spracheingabesystemen bei PCs und im Einklang mit der zunehmenden Komplexität der erwähnten handgehaltenen Geräte, werden auch diese neuerdings verstärkt mit Sprachsteuerungs- bzw. Eingabemöglichkeiten angeboten. Marktüblich sind bereits entsprechend ausgerüstete Fernbediengeräte - die allerdings nur über ein geringes Vokabular an Steuerworten verfügen - sowie Mobiltelefone, bei denen insbesondere Steuerfunktionen per Spracheingabe ausgelöst und Rufnummern angewählt werden können.

Die die eigentliche Sprachsteuerung bzw. -eingabe betreffenden Komponenten solcher Geräte wie auch die herkömmlichen sprachorientierten Bedienoberflächen, bei denen dem Benutzer optisch ein bestimmtes Menü angezeigt und er verbal zu Eingaben aufgefordert wird, werden nachfolgend kurz als "Dialog-system" bezeichnet; allgemeiner wird auch in diesem Sinne von Benutzeroberfläche oder Benutzerschnittstelle gesprochen.

Derartige Benutzeroberflächen, ohne die moderne handgehaltene Geräte mit hoher Komplexität nicht mehr denkbar sind, müssen selbstverständlich für den Vertrieb der Geräte auf internationalen Märkten mit landessprachlichen Wortschätzen dieser Märkte ausgeführt werden. Mit steigender Komplexität der erwähnten Bedienoberflächen bzw. Benutzeroberfläche wird auch deren Nationalisierung einerseits zunehmend bedeutsam und andererseits zunehmend aufwendig. Sie bringt erhebliche organisatorische bzw. logistische Probleme und hohe Kosten mit sich. Während für Bedienoberflächen mit geringer Komplexität (beispielsweise für Fernseher, einfache Fernbediengeräte und grafische Benutzeroberflächen) normalerweise alle relevanten landessprachlichen Konfigurationen auf ein und demselben Gerät vorgehalten werden, wird dies aber mit steigender Komplexität der Bedienoberflächen bzw. Dialogsysteme und insbesondere für aufwendige Sprachsteuersysteme immer weniger sinnvoll.

Der Erfindung liegt daher die Aufgabe zugrunde, ein Verfahren zur Konfigurierung einer Benutzeroberfläche anzugeben, das den organisatorischen und logistischen Aufwand wesentlich reduziert und deutliche Kosteneinsparungen erbringt.

Diese Aufgabe wird durch ein Verfahren mit den Merkmalen des Anspruchs 1 gelöst.

Die Erfindung schließt den grundlegenden Gedanken ein, im jeweiligen elektronischen Gerät bei dessen Produktion und Auslieferung an den Endkunden lediglich eine rudimentäre Endgerät-Komponente der Benutzeroberfläche zu implementieren und die Konfigurierung ("Nationalisierung") durch den jeweiligen Benutzer selbst initiieren zu lassen. Sie schließt weiter den Gedanken ein, diese Nationalisierung über ein Kommunikationsnetz (z. B. das Internet, ein Telefon-Festnetz oder ein Mobilfunknetz) vorzunehmen, an das das Gerät ohnehin angeschlossen werden muß oder zumindest ohne weiteres angeschlossen werden kann. Weiterhin gehört zur Erfindung der Gedanke, von einer Zentrale in diesem Kommunikationsnetz mindestens Teile entsprechender Wissensquellen, speziell mindestens Teile eines von mehreren gespeicherten (landessprachlichen oder auch dialektbezogenen) Wortschätzen, an die Endgerät-Komponente zu übertragen. Diese Konfigurierung der Benutzeroberfläche stellt im Grunde einen letzten Schritt der Herstellung des jeweiligen Gerätes dar.

Die Endgerät-Komponente muß zum Empfang und zur Speicherung dieses Wortschatzes und zu dessen Eingliederung in die Benutzeroberfläche bzw. die Bedienoberfläche ausgebildet sein. Bei komplexen Benutzeroberflächen mit sprecherunabhängiger Spracherkennung, Sprachsynthese bzw. Voice-Prompts sowie komplexen grafischen Bedienoberflächen mit nationalisierten Touch-Screens sind in den Benutzeroberflächen alle notwendigen Bedienalgorithmen vorgeprägt, die sprachenabhängigen Anteile der Benutzeroberfläche werden jedoch erst beim Endkunden aus dem Kommunikationsnetz übernommen.

In einer bevorzugten Ausführung der Erfindung erfolgt die Übertragung des Wortschatzes bzw. sonstiger Wissensquellen an die Endgerät-Komponente im Ansprechen auf ein von dieser ausgesandtes Anforderungssignal. Dieses wird insbesondere aufgrund eines Wahlvorganges einer Landessprache (oder auch eines Dialektes) durch den Benutzer bei Inbetriebnahme seines Endgerätes generiert. Die Übertragung und Speicherung des Wortschatzes erfolgt dann auf diese Eingabe hin selbständig und für den Nutzer "unsichtbar". Das Anforderungssignal kann alternativ auch aufgrund von auf der SIM-Karte enthaltenen Informationen zum Wohnort des Benutzers automatisch generiert werden.

Bei Mobilfunk-Endgeräten bevorzugt ist eine bei Einloggen in das Netz startende Menüführung, in deren Rahmen dem Benutzer aufgrund der in seiner SIM-Karte enthaltenen bzw. aus dem HLR des Mobilfunknetzes erhältlichen Wohnortinformation eine Landessprache für die Nationalisierung vorgeschlagen, ihm aber die Option einer anderweitigen Sprachwahl eingeräumt wird. Es kann sich also z. B. der Benutzer eines Mobiltelefons in Deutschland durchaus dafür entscheiden, eine englische Spracherkennung auf sein Gerät zu laden, oder ein Bewohner der Schweiz wählt seine Muttersprace aus den Amtssprachen aus.

Im Rahmen der vorliegenden Erfindung soll der Begriff "Landessprache" auch Dialekte umfassen. Es besteht also auch die Möglichkeit der Konfigurierung einer dialekt- bzw. mundartspezifischen Benutzeroberfläche für Teile eines bestimmten Landes, beispielsweise für Bayern und Sachsen in Deutschland.

Die Telefongesellschaften bzw. Provider verfügen in der Regel über die entsprechenden Informationen über den Benutzer und können von sich aus bestimmte Nationalisierungs- bzw. Regionalisierungsvarianten anbieten, wobei die endgültige Festlegung zweckmäßigerweise dem Benutzer überlassen sein sollte. Die Initialisierungsdialoge können daher sehr kurz und einfach sein und sind in keiner Weise mit den umständlichen Enrollment-Prozeduren bei Verfahren der sprecherabhängigen Spracherkennung zu vergleichen.

Alternativ können - insbesondere bei ständig an ein Kommunikationsnetz angeschlossenen Endgeräten wie etwa Mobilfunk-Endgeräten - Nationalisierungs-Wortschätze auf ein vom Kommunikationsnetz selbst ausgehendes Steuersignal hin an das Endgerät überspielt werden. Dies ist beispielsweise im Sinne der Aktualisierung (des Updates) sinnvoll.

In bevorzugten Varianten der Ausführung der Erfindung werden in Benutzeroberflächen (Bedienoberflächen bzw. Benutzerschnittstellen) spezieller Endgeräte auch unterschiedlich spezifizierte Wortschätze oder Wortschatzteile geladen. So kann der übertragene Wortschatz insbesondere landessprachliche Steuerworte zur Bedienung des Gerätes, insbesondere für eine optische Menüführung und/oder Sprachsteuerung, oder auch für ein Sprachsynthesesystem umfassen. Dies wird insbesondere für Fernbedienungen zur Steuerung stationärer Geräte oder Gerätekombinationen im Heimbereich gelten, wo im wesentlichen nur derartige Wortschätze benötigt werden. Ein Steuerwortschatz zur Bedienung eines Fernsehgerätes kann beispielsweise von einer speziellen Videotextseite heruntergeladen werden, die vom Gerätehersteller und/oder einem Fernsehsender oder auch einem unabhängigen Dienstanbieter erstellt und unterhalten wird.

Auch für Telekommunikations-Endgeräte und handgehaltene Computer bilden Steuerworte aber mindestens einen Teil des relevanten Nationalisierungs-Wortschatzes. Für diese Geräte ist darüber hinaus ein landessprachlicher Satz von Personenund/oder Ortsnamen zur Sprachsteuerung von Adreß- bzw. Telefonbuchfunktionen und/oder ein landessprachliches Basisvokabular der Umgangssprache bzw. auch bestimmter Fachsprachen - speziell für Handheld-PCs bzw. PDAs für bestimmte Berufsgruppen - mit Vorteil zu implementieren.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
Fig. 1 eine schematische Darstellung einer ersten Ausführungsform der Erfindung (Mobiltelefon) in Art eines Funktions-Blockschaltbildes,
Fig. 2 eine schematische Darstellung einer zweiten Ausführungsform der Erfindung (Handheld-PC) in Form eines Funktions-Blockschaltbildes und
Fig. 3 eine schematische Darstellung einer dritten Ausführungsform der Erfindung (mobiles Fernbediengerät) in Art eines Funktions-Blockschaltbildes.

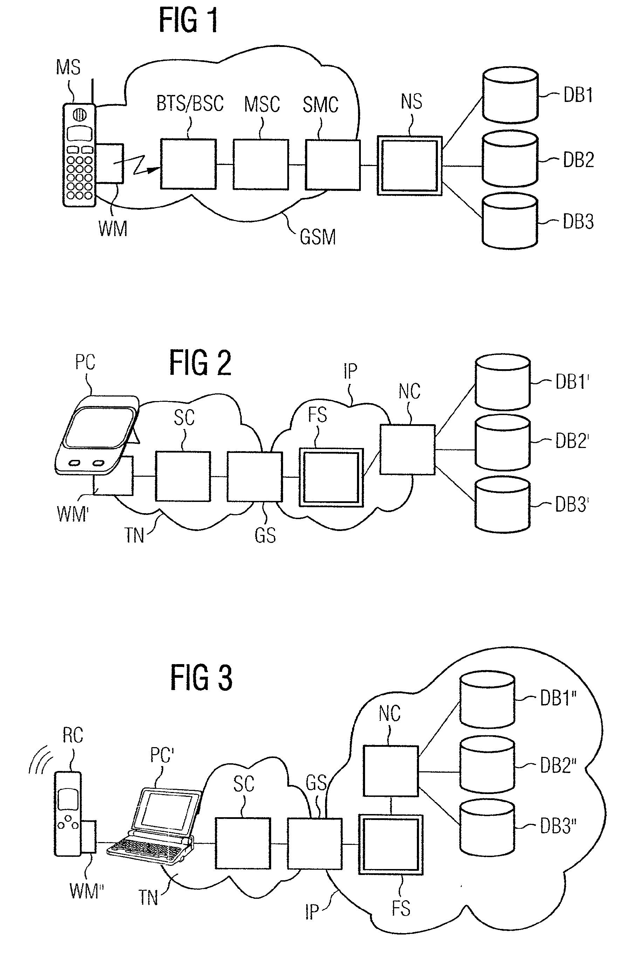

In Fig. 1 ist dargestellt, wie ein Mobiltelefon MS in üblicher Weise über eine Basisstation BTS/BSC und ein Mobilvermittlungszentrum MSC mit einer Dienst- und Wartungszentrale SMC eines Mobilfunknetzes GSM verbunden ist. Die übrigen Komponenten eines Mobilfunknetzes nach dem GSM-Standard sind hier von geringer Bedeutung und werden, da der Aufbau eines solchen Netzes allgemein bekannt ist, nicht weiter beschrieben. Der Dienst- und Wartungszentrale SMC ist zur Durchführung des erfindungsgemäßen Konfigurierungsverfahrens für das Mobiltelefon MS ein Nationalisierungs-Server NS zugeordnet, an den wiederum eine Mehrzahl von Wortschatz-Datenbasen DB1, DB2 und DB3 mit landessprachlichen Wortschätzen für das Mobiltelefon MS in verschiedene Sprachen angeschlossen sind. Die Wortschatz-Datenbasen enthalten insbesondere eine Auswahl gängiger Personennamen der jeweiligen Landessprache sowie einen umfangreichen Steuerwortschatz, der zur Bedienung eines komfortablen Mobiltelefons per Sprachsteuerung ausreicht.

Das Mobiltelefon MS wird mit der üblichen Software, d. h. Steuer- und Verarbeitungsalgorithmen zur Gerätebedienung, jedoch ohne nationalen Wortschatz ausgeliefert. Bei der ersten Inbetriebnahme wird automatisch eine Verbindung zum Dienstund Wartungszentrum SMC des Providers hergestellt und aufgrund der in der (nicht dargestellten) SIM-Karte gespeicherten Informationen über den Registrierungsort des Telefons eine Verbindung zu derjenigen Wortschatz-Datenbasis hergestellt, die den für den Registrierungsort des Gerätes zutreffenden Wortschatz gespeichert hält.

Dem Benutzer wird im Rahmen einer Minimalversion einer Menüführung die Möglichkeit gegeben, diesen Wortschatz zur Implementierung in seinem Gerät zu bestätigen oder einen anderen landessprachlichen Wortschatz auszuwählen. Nach der entsprechenden Eingabe wird über die Netzverbindung der Wortschatz in den internen Wortschatzspeicher WM des Mobiltelefons MS geladen. Das Mobiltelefon ist nun vollständig funktionsfähig.

Ganz ähnlich funktioniert die Herstellung eines vollständig funktionsfähigen Handheld-PC PC gemäß Fig. 2. Hier wird - was in der Figur aufgrund der allgemeinen Bekanntheit entsprechender Anordnungen lediglich symbolisch dargestellt ist - über eine Vermittlungsstelle SC in einem Telefon-Festnetz TN und einen Gateway-Server GS eine Verbindung zu einem Firmware-Server FS des Herstellers des Handheld-PC im Internet IP hergestellt. Bei dem Firmware-Server FS ist eine Nationalisierungs-Ablaufsteuerung NC realisiert, die Zugriff auf eine Mehrzahl von Wortschatz-Datenbasen DB1' bis DB3' hat.

Der Handheld-PC ist bei Auslieferung herstellerseitig im wesentlichen mit der üblichen Software ausgestattet, jedoch ist nur ein Minimalwortschatz bzw. eine symbolorientierte Bedienerführung implementiert, die eine Verbindungsaufnahme mit dem Firmware-Server FS erlaubt. Nach Herstellung der Verbindung durch den Benutzer wird anhand der Landesvorwahl seines Einwahlknotens ermittelt, welche Landessprache mit größter Wahrscheinlichkeit in das Gerät zu implementieren ist, und es wird eine Verbindung zur entsprechenden Wortschatz-Datenbasis hergestellt.

Der Benutzer wird auf dem Display darüber informiert, mit welchem landessprachlichen Wortschatz die Benutzeroberfläche konfiguriert werden soll, und er wird zur Bestätigung oder Auswahl einer anderen Landessprache aufgefordert. Nach erfolgter Bestätigung oder anderweitiger Auswahl wird aus der entsprechenden Wortschatz-Datenbasis über die Nationalisierungs-Ablaufsteuerung NC und die Internet-Verbindung der Wortschatz in den internen Wortschatzspeicher WM' geladen. Hiermit ist die Benutzerschnittstelle bzw. die Benutzeroberfläche des Handheld-PC vollständig konfiguriert und dieser uneingeschränkt funktionsfähig. Der Umfang des implementierten Wortschatzes hängt von der Leistungsklasse des Gerätes ab und kann neben einem Steuerwortschatz einen Basiswortschatz der Umgangssprache und/oder eine Auswahl von Personen- und geografischen Namen umfassen. Es ist aber ebenso die Bereitstellung von Fachterminologien in den Wortschatz-Datenbasen möglich.

Grundsätzlich ähnlich wie die Konfigurierung der Benutzerschnittstellen bzw. Benutzeroberflächen in den Anordnungen nach Fig. 1 und 2 verläuft auch die Fertigstellung einer universell einsetzbaren mobilen Fernsteuereinheit RC gemäß Fig. 3. Diese kann in an sich bekannter Weise auf Infrarot-, Ultraschall- oder Bluetooth-Basis zur Bedienung einer Mehrzahl von stationären elektrischen bzw. elektronischen Geräten in einem Haushalt genutzt werden und benötigt einen entsprechenden nationalen Steuerwortschatz. Bei Auslieferung sind die zur Realisierung der komplexen Steuerfunktionen erforderlichen Algorithmen sowie eine Minimal-Benutzerschnittstelle implementiert. Diese ermöglicht den Anschluß an einen Laptop PC' und über diesen via Internet an eine Firmware-Serverkonfiguration gemäß Fig. 2. Letztere wird hier nicht nochmals beschrieben.

Neben dem Umstand, daß die Verbindung zum Firmware-Server FS nicht direkt über das Festnetz und das Internet, sondern via Laptop hergestellt wird, unterscheidet sich diese Ausführungsform von derjenigen nach Fig. 2 im wesentlichen nur durch die in den Wortschatz-Datenbasen DB1'' bis DB3'' implementierten Wortschätze. Diese enthalten nämlich im wesentlichen Steuerwortschätze für Audio-, Video- und elektrische Heimgeräte etc., da Personen- und geografische Namen sowie umgangs- oder fachsprachliche Komponenten für die Funktion einer Fernbedieneinrichtung nicht benötigt werden. Aufgrund des relativ geringen Gesamtwortschatzes ist auch keine Differenzierung zwischen verschiedenen Sub-Datenbasen oder Speicherbereichen sinnvoll, sondern lediglich die Differenzierung nach Landessprachen. Die Auswahl kann auch hier vorläufig aufgrund des vom Laptop PC' genutzten Einwahlknotens erfolgen, bevorzugt ist aber eine Auswertung der Internetadresse des Benutzers oder einer gleich zu Anfang durch diesen getroffenen Auswahl.

Die Ausführung der Erfindung ist nicht auf die oben skizzierten Beispiele beschränkt, sondern im Rahmen der Ansprüche ebenso in einer Vielzahl von Abwandlungen möglich, die im Rahmen fachgemäßen Handelns liegen. Insbesondere liegen Kombinationen einzelner Komponenten der beispielartig beschriebenen Anordnungen im Bereich der Erfindung.

## Patentansprüche

1. Verfahren zur Konfigurierung einer Benutzeroberfläche für ein elektronisches Gerät (MS; PC; RC) zum mindestens temporären Anschluß an ein Telekommunikations- bzw. Datennetz (GSM; TN, IP), insbesondere für ein Telekommunikations-Endgerät, einen Handheld-PC, ein Fernbediengerät oder ein Audio- bzw. Videogerät, mit einer sprachorientierten Bedienoberfläche und/oder einer Spracheingabeeinrichtung,
**dadurch gekennzeichnet, daß**
die Konfigurierung der Bedienoberfläche oder Spracheingabeeinrichtung über das Telekommunikations- bzw. Datennetz erfolgt, wobei mindestens Teile einer Sprach-Wissensquelle, insbesondere mindestens Teile eines Wortschatzes von mehreren gespeicherten Wortschätzen, von einer Zentrale (SMC, FS) im Telekommunikations- bzw. Datennetz an eine Endgerät-Komponente übertragen und in dieser empfangen und in einer internen Wissensquellen-Datenbasis, insbesondere einem internen Wortschatzspeicher (WM; WM'; WM''), gespeichert werden.

2. Verfahren nach Anspruch 1,
**dadurch gekennzeichnet, daß**
die Übertragung der Wissensquelle an die Endgerät-Komponente im Ansprechen auf ein von dieser ausgehendes Anforderungssignal erfolgt.

3. Verfahren nach Anspruch 2,
**dadurch gekennzeichnet, daß**
das Anforderungssignal aufgrund einer Endgerät-Kennung oder der Wahl-Eingabe einer Landessprache durch den Benutzer generiert wird und die Übertragung und Speicherung des Wortschatzes auf die Wahl-Eingabe hin selbsttätig erfolgen.

4. Verfahren nach einem der vorangehenden Ansprüche,
**dadurch gekennzeichnet, daß**
der übertragene Wortschatz landessprachliche Steuerworte zur Bedienung des Gerätes, insbesondere für eine optische Menüführung und/oder eine Sprachsteuerung und/oder Sprachsynthese, umfaßt.

5. Verfahren nach einem der vorangehenden Ansprüche,
**dadurch gekennzeichnet, daß**
der übertragene Wortschatz einen landessprachlichen Satz von Personen- und/oder Ortsnamen umfaßt.

6. Verfahren nach einem der vorangehenden Ansprüche,
**dadurch gekennzeichnet, daß**
der übertragene Wortschatz ein landessprachliches Basisvokabular der Umgangssprache und/oder einer Fachsprache umfaßt.

7. Verfahren nach einem der vorangehenden Ansprüche,
**dadurch gekennzeichnet, daß**
die übertragene Wissensquelle ein landessprachlich präpariertes neuronales Netz bzw. Hidden-Markov-Modell umfaßt.

8. Verfahren nach einem der vorangehenden Ansprüche,
**dadurch gekennzeichnet, daß**
die Übertragung der Sprach-Wissensquelle bzw. Sprach-Wissensquellen als eigenständiger Dienst in dem Telekommunikationsbzw. Datennetz (GSM; TN, IP) organisiert ist.

9. Elektronisches Gerät, insbesondere Telekommunikations-Endgerät (MS), Handheld-PC (PC), Fernbediengerät (RC), Audiogerät oder Videogerät, mit einer Benutzerschnittstelle, die mit einem Verfahren nach einem der vorangehenden Ansprüche konfiguriert wird.

10. Elektronisches Gerät nach Anspruch 9,
**dadurch gekennzeichnet, daß**
die Benutzeroberfläche eine Sprachsteuerung und/oder Mittel zur Spracheingabe von Text aufweist.

11. Elektronisches Gerät nach Anspruch 8 oder 9,
**dadurch gekennzeichnet, daß**
die Benutzeroberfläche eine optische Anzeigeeinrichtung zur Anzeige von Worten oder landessprachlich bzw. national akzentuierten Akronymen und/oder grafischen Symbolen aufweist.

12. System zur Durchführung des Verfahrens nach einem der Ansprüche 1 bis 8,
**gekennzeichnet durch**
einen Server (NS; FS) im Telekommunikations- bzw. Datennetz (GSM; TN, IP) mit Speichermitteln (DB1 bis DB3; DB1' bis DB3'; DB1'' bis DB3'') zur zentralen Speicherung der Sprach-Wissensquelle bzw. Sprach-Wissensquellen und Übertragungsmitteln zu deren Übertragung zu dem elektronischen Gerät (MS; PC; RC).
